# EUROPEAN PATENT APPLICATION

(11) **EP 4 345 610 A1**
(43) Date of publication of application: **03.04.2024**
(21) Application number: 22198120.2
(22) Date of filing: 27.09.2022
(51) Int. Cl.: G06F 8/77, G06F 8/72, G06N 3/04

(54) **A METHOD FOR ESTIMATING A POTENTIAL REPLACEMENT OF AT LEAST ONE HAND-CODED FUNCTION IN A PROGRAM CODE WITH A MACHINE LEARNING ALGORITHM, COMPUTER PROGRAM PRODUCT, COMPUTER-READABLE STORAGE MEDIUM AS WELL AS AN ELECTRONIC COMPUTING DEVICE**

(71) Applicant: Siemens Aktiengesellschaft, 80333 München (DE)
(72) Inventor: ROTHBAUER, Stefan, 86156 Augsburg (DE); IONESCU, Tudor, 1080 Wien (AT)
(74) Representative: Siemens Patent Attorneys

(57) **Abstract**

The invention relates to a method for estimating a potential replacement of at least one hand-coded function (12) in a program code (14) with a machine learning algorithm (16) by an electronic computing device (10), comprising the steps of estimating a code complexity (18) of the hand-coded function (12) (S2), estimating a machine learning model error (20) for the potential machine learning algorithm (16) depending on the estimated code complexity (18), S12) and estimating the potential replacement depending on the estimated machine learning model error (20). Furthermore, the invention relates to a computer program product, a computer-readable storage medium as well as to an electronic computing device (10).

## Description

The invention relates to a method for estimating a potential replacement of at least one hand-coded function in a program code with a trained machine learning model on an electronic computing device, as well as to a computer program product, a computer-readable storage medium as well as an electronic computing device.

Hand-coded software functions implementing computational algorithms, for example, in domains like medical systems, computer vision or industrial automation, can have long execution times, can be written in outdated programming languages and can have hand-coded complexity. These problems lead to high software maintenance costs and increased risk-related to software evolution. For these reasons, hand-coded software is increasingly being replaced by functionally equivalent machine learning (ML) models, which perform the same computation as the hand-coded algorithm. Furthermore, further advantages of replacing hand-coded software functions by their machine learning equivalence comprises more advantages, for example, including computational homogeneity, possibility to implement in hardware, constant running time of the execution (or scoring) of trained machine learning models, constant memory usage of trained machine learning models, high reliability, etc.. Software that is used to generate training data for machine learning models can be maintained at a development rather than a product-grade level. These advantages lead to improved system quality attributes, such as performance, reliability, maintainability and stability.

In this context, the problem of how to determine which hand-coded software functions are best suitable for being replaced by functionally equivalent machine learning models arises. Currently, this decision is taken subjectively by experts based on intuition and experience. Therefore, there is a need to provide efficient, automated means for supporting expert decisions concerning which hand-coded software functions comprised in a possible large code base are more suitable to be replaced by machine learning equivalence than other functions from the same code base.

Therefore, there is a further need for a method for estimating or predicting an upper bound of the error of a machine learning model that replaces a hand-coded function beforehand in an automated fashion without actually training and evaluating said machine learning model. Such a method can provide experts with valuable information in a timely manner when deciding which hand-coded software function should be replaced by equivalent machine learning models.

Therefore, it is an object of the invention to provide a method, a computer program product, a computer-readable storage medium as well as an electronic computing device, by which an efficient estimation of a potential replacement of at least one hand-coded function in a program code with a machine learning algorithm is provided.

This object is solved by a method, a computer program product, a computer-readable storage medium as well as an electronic computing device according to the independent claims. Advantageous forms of configuration are presented in the dependent claims.

One aspect of the invention relates to a method for estimating a quantitative indicator or score for a potential replacement of at least one (predetermined) hand-coded function in a program code with a machine learning algorithm by an electronic computing device, comprising the steps of estimating a code complexity of the hand-coded function. An estimate of the error of the potential machine learning model replacing the said hand-coded function is estimated depending on the measured code complexity of the function being replaced. The feasibility and benefit of the potential replacement is thus estimated depending on the estimated machine learning model error.

In this context the term estimating can also be regarded to the term forecasting.

Therefore, a method is provided, by which an estimation for the potential replacement of at least the hand-coded function is realized in an efficient way.

In particular, the invention describes a method for estimating the error of a machine learning (ML) model, for example, a neural network that is trained using artificial data generated using software-implemented functions, called approximated functions. To forecast the error of the machine learning model compared to the approximated function, the method uses static code complexity methods, which measure the size of the control flow graph of the approximated function. For pure computational functions, the machine learning model error and the complexity metric stand in an isometric relationship. This allows the use of the complexity metric to estimate the error of the machine learning model without actually training the machine learning model. Furthermore, the method allows the formulation of a linear relationship between machine learning model error and the complexity metric, which can be used to estimate an upper bound of the machine learning model error with significantly less effort.

The advantages of the method are evident in the context of software 2.0, a blend of machine learning models and hand-coded functions that produce a higher performance than solely hand-coded software. For example, selected functions from existing code bases, which are written in programming languages that are no longer supported at a large scale or which yield a low execution performance and cannot be paralyzed can be replaced by trained machine learning models approximating them, which can then be deployed in modern computational environments, such as the cloud or edge. In this context, the proposed method can be used to efficiently estimate the error of the machine learning models that are to replace the hand-coded functions from the existing (legacy) code base.

Industrial applications of the invention include but are not limited to, for example, a machine learning model error estimation plugin for existing software development environments. Furthermore, a decision support tool for refactoring (legacy) code based in view of a high-performant, cloud-ready deployment. An automated verification of computational functions in large code bases is provided, which would perform better as machine learning models and a cost and effort estimation tool in, for example, software 2.0 projects.

In particular, the invention enables a fast, intuitive, cost-effective, and efficient way of forecasting the model error of a machine learning model, in particular a neural network, before it is actually being trained. By establishing a linear relation between the complexity and the model error, the method can be integrated in existing software in machine learning model development tools. These methods provide developers with means for determining/estimating which functions from a possibly large code base can be approximated by machine learning models in productive software in order to improve the quality attributes of the software, notably reducing execution time and improving reliability.

The proposed methods allow the identification of those functions in a possibly large code base which can be replaced by trained machine learning models. This has the advantage that the hand-coded functions identified as suitable for replacement by ML models no longer need to be integrated into the operative system. It suffices for them to be part of a development and test code base rather than a product quality code base, thus reducing development and maintenance costs.

The advantage of providing an error estimate for a functional equivalent machine learning model for a hand-coded function without actually training the model and without necessarily executing the function includes performing the steps of model training and function execution only after identifying a list of candidate functions from a much larger list of functions comprised by the software under investigation. This reduces costs and can be executed very fast since computing code complexity metrics are computationally efficient. Furthermore, the user is provided with a tool to oversee the fitness of the software code base in view of an evolution towards machine learning intensive software. This tool can provide valuable insights that supports strategic and technical decision making.

Further advantages of replacing hand-coded software functions by their machine learning equivalent are computational homogeneity, possibility to implement in hardware, constant running time of the execution (or scoring) of trained machine learning models, constant memory usage of trained machine learning models, high reliability, etc. Software that is used to generate training data for machine learning models can be maintained at a development rather than a product-grade level. These advantages lead to improved system quality attributes, such as performance, reliability, maintainability and stability. Developing a machine learning model instead of hand-coded function can be less costly, if the cost and effort of generating training, validation, and test data is smaller than the cost and effort required to understand, refactor, and reimplement legacy software.

The behavior of a machine learning model can easily be adapted at design time or run time by generating data and labels that correspond to the desired new behavior. This is especially useful in, for example, cases that new requirements must be addressed or when errors are discovered. Once the initial setup for training a machine learning model along with methods to generate the data are in place, the maintenance and adaption of the machine learning model can be done efficiently.

According to an embodiment, the code complexity is estimated by using a cyclomatic complexity algorithm. In particular, according to an embodiment, the use of static code complexity metrics applied to efficiently hand-coded functions, for example, having a minimum description length, to forecast the upper bound of the error of a machine learning model approximating that function. To this end, the cyclomatic complexity can be used as a starting point, while it is also possible to use other static code complexity metrics. An efficiently hand-coded function is to be understood as a function written by a skilled programmer in such a way that it nearly fulfills the minimum description length (MDL) condition. This can be achieved either qualitatively through expert judgements or automatically using various code translation and optimization techniques. In this context, the cyclomatic complexity of an efficiently hand-coded function provides a good estimate of the upper bound of the error of a functionally equivalent machine learning model that was trained using data generated by executing the said hand-coded function. In other words, it is assumed that an isometry exists between the complexity of a hand-coded function and the error of a neural network model that has the same inputs and outputs as said function and is trained using input and output data generated by executing that function. When training the model, the inputs should cover a relevant region of the input space of that function. The cyclomatic complexity can thus be computed for a hand-coded function in order to forecast the error of a neural network that is trained using data generated by executing the said function. The advantages of providing an error estimate for a functionally equivalent machine learning model for a hand-coded function without actually training the model and without necessarily executing the function include performing the steps of model training and function execution only after identifying a list of candidate functions from a much larger list of functions comprised by the software under investigation. This reduces costs and can be executed very fast since computing code complexity metrics are computational efficient. Furthermore, the user is provided with a tool to oversee the fitness of the software code base in view of an evolution towards machine learning intensive software. This tool can provide invaluable insights that supports strategic and technical decision making. Alternatively to the cyclomatic complexity a Halstead complexity or the maintainability index, for example, may be used. Also other complexity metrics can be used.

According to another embodiment, characteristics of the program code are measured for estimating the potential replacement of the hand-coded function. Furthermore, as the said characteristics the execution time and/or a memory consumption and/or a usage of critical instructions or limited resources are measured. In particular, the program code is profiled. The characteristics of the program are measured, or individual units of the program, for example functions, during the execution to obtain measures for the relevant resources used by the program such as the execution times (ET), memory consumption (MC), usage of the critical instructions or limited resources like file handles, is provided. For each function under consideration, the complexity metrics are computed. In particular, all functions with regard to the obtained metrics from profiling and code complexity using hierarchical or non-hierarchical distance/space clustering algorithms are provided.

According to another embodiment, a neural network is provided as the machine learning algorithm. For example, the neural network can comprise at least two layers, wherein each layer may comprise at least eight neurons.

According to another embodiment, the estimation of replacement is performed for a plurality of hand-coded functions of the program code. For example, the program code may comprise a plurality of hand-coded functions. These hand-coded functions are then analyzed, in particular whether the hand-coded functions can be replaced by the machine learning model. Therefore, a big program code may be more efficient by replacing the hand-coded functions with the machine learning model.

According to another embodiment, the plurality of hand-coded functions is clustered depending on the estimated complexity. In particular, the hand-coded functions are clustered with regard to the obtained metrics from profiling a code complexity using hierarchical or non-hierarchical, distance/space clustering algorithms. The clusters or groups are analyzed regarding different replacement strategies. Depending on the individual cluster's metrics, an optimal approach for replacement is used. For example, the following replacement strategies can be used: A first cluster can contain functions having a high execution time (ET), and/or memory consumption (MC) and low values regarding to code complexity (CC). The functions in this cluster are suitable candidates to be replaced by equivalent machine learning models to improve performance; a second clustered can contain functions having high execution time (ET) and/or memory consumption (MC) and high values regarding code complexity (CC). The functions in this cluster can first be split into smaller functions; a third cluster can contain functions having low execution time (ET) and/or memory consumption (MC) and low values regarding code complexity (CC). The functions in this cluster have good runtime and complexity metrics, which indicates that their replacement by machine learning model would not improve performance and maintenance metrics considerably.

According to another embodiment, depending on a threshold of the forecasted or projected machine learning model error, the hand-coded function is suggested for a replacement. In particular, the threshold may be provided by a user of the electronic computing device. If the projected machine learning error is higher than the threshold, the machine learning model may not be suggested. If the machine learning model error is lower than the threshold, the machine learning model will be suggested for a replacement to the user. The forecasted machine model error thus provides an indication of the cost related to the replacement of at least one hand-coded function by at least one ML model, wherein the cost is a function of the error.

Furthermore, the hand-coded function may be replaced with the machine learning model depending on the forecasted machine learning model error. In particular, the hand-coded function can be replaced automatically, if the forecasted machine learning model error is lower than a provided threshold.

Furthermore, the used machine learning model can be trained with data generated by the replaced hand-coded function. In particular, this is a procedure for replacing the hand-coded function by the equivalent machine learning model. Input data for training and validating the machine learning model as a substitute for the function are generated. The following input data generation strategies from the testing domain may be used: systematically generated inputs that exhaustively cover the input space, for example using a grid, possibly of differing mash sizes depending on the problem solved by the function; randomly generated inputs having a probability density function that resembles the usage profile of the functions of the operative domain; a mix of the strategies to ensure deterministically that known critical cases are covered sufficiently to enable learning of the required behavior; and model-based generated inputs that correspond to known behaviors of the system in the most relevant usage scenarios. The hand-coded functions are executed to be replaced for the generated input data to obtained corresponding output data. The model is trained using training and validation data according to the machine learning approach chosen until the validation shows the required accuracy. The new function represented by the trained ML model is integrated into the target operational environment. In the same way, generating a possibly small representative amount of test data in the operation environment of the software in order to measure the performance of the model in the target environment is provided. As an additional measure to ensure correct behavior, a back-to-back-test of the system using the function being replaced and the machine learning model approximating that function can be performed.

According to another embodiment, a machine learning model architecture with hyperparameters is used for estimating the machine learning model error depending on the estimated complexity. Additionally, or alternatively, for estimating the machine learning model error depending on the estimated code complexity, an isometric relation, in particular a linear relation, between the complexity and the machine learning model error is assumed. In particular, for example the case of supervised training using data generated by an exact, hand-coded function, it is provided that the complexity of that function, in particular the cyclomatic complexity or another metric defined against the control flow graph of that function, is transferred to the training data generated by the execution of that functions for an exhaustive or relevant region of the input space. Since the error of a neural network model depends on the complexity of the implicit model underlying the training data, it is assumed that there is an isometric relation between the cyclomatic complexity of a hand-coded function and the error of a neural network model that approximates it. Furthermore, it is assumed that this isometric relation is linear and that it can be leveraged to formulate a static code-based metric for an efficiently hand-coded function that can be used to forecast the error of a projected neural network model approximating that function. In a further step, it is provided that the cyclomatic complexity metric represents a non-injective statistic of the control flow graph of the hand-coded function being considered for replacement. In other words, semantically different functions can have the same cyclomatic complexity. This also applies to the model error of a machine learning model. A highly complex hand-coded function has a complex control flow graph. This also suggests that a proportionally complex neural network architecture is required to approximate the function accurately. Assuming that the architecture of the neural network is invariant, for example, one layer having 16 neurons, and that the network is trained to approximate different functions, for example, common math functions from a math library, it is provided that there is a detectable difference between the model errors of the different trained neural network models approximating different functions having different cyclomatic complexities. Provided that the same amount of similarly distributed, randomized training data is used to train each model, this assumption can be validated empirically. Assuming the same conditions, in particular the network architecture with hyperparameters, the same amount of similarity distributed training data, it is furthermore provided that there is a correlation between the cyclomatic complexity and model error. If a more complex model underlying the training data cannot be represented by a neural network, the neural network model will be underfitted and thus approximate the function with a large error. The same network, however, could be well-fitted or overfitted for a less complex training data set generated using a less complex hand-coded function, thus yielding a smaller error. Conversely, a more complex program will generate a more complex training data set. To measure that complexity, the training error of a neural network model with hyperparameters that was trained using training data produced by different hand-coded functions with different cyclomatic complexities can be considered.

In particular, the method is a computer implemented method. Therefore, another aspect of the invention relates to a computer program product comprising program code means for performing a method according to the preceding aspect. The computer program product may also be regarded to a computer program.

A still further aspect of the invention relates to a computer-readable storage medium comprising at least the computer program product according to the preceding aspect.

A still further aspect of the invention relates to an electronic computing device for estimating a potential replacement of at least one hand-coded function in a program code with a machine learning algorithm, wherein the electronic computing device is configured for performing a method according to the preceding aspect. In particular, the method is performed by the electronic computing device.

The electronic computing device therefore comprises means for performing the method. In particular, the electronic computing device may comprise processors, circuits, in particular integrated circuits, and further electronic means for performing the method.

For use cases or use situations, which may arise in the method and which are not explicitly described here, it may be provided that, in accordance with the method, an error message and/or a prompt for user feedback is output and/or a default setting and/or a predetermined initial state is set.

Therefore:
- Fig. 1: shows a schematic flow chart according to an embodiment of the invention; and
- Fig. 2: shows a schematic diagram according to an embodiment of the invention.

In the figures the same elements are comprising the same reference signs.

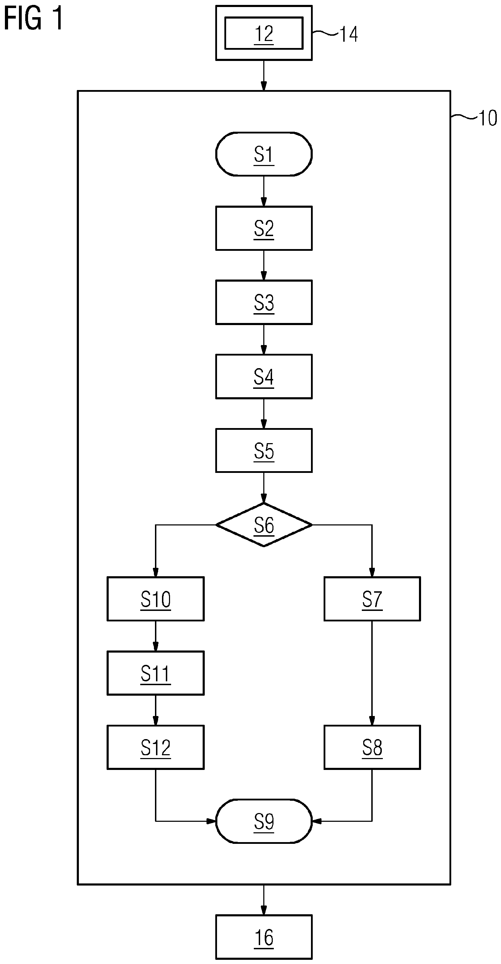

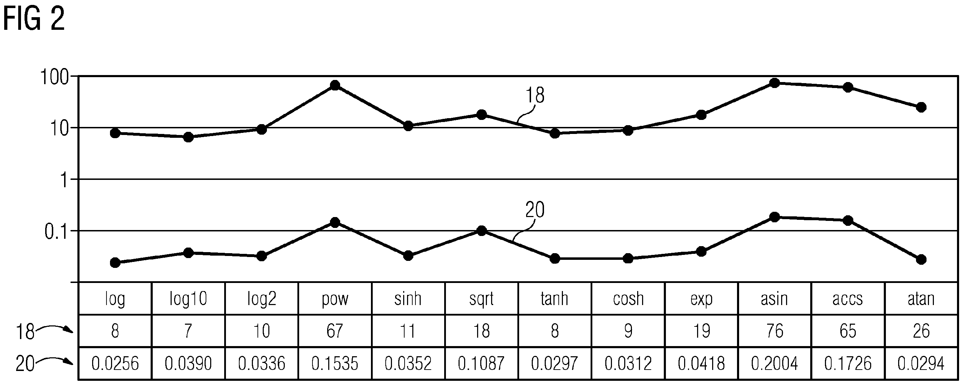

Fig. 1 shows a schematic flow chart according to an embodiment of the method and in particular of an embodiment of an electronic computing device 10. The electronic computing device 10 is configured for estimating a potential replacement of at least one hand-coded function 12 in a program code 14 with a machine learning algorithm 16. In particular, Fig. 1 shows that for estimating the potential replacement of the at least one hand-coded function 12 in the program code 14, a code complexity 18 (Fig. 2) of the hand-coded function 12 is estimated. A machine learning model error 20 (Fig. 2) for the potential machine learning algorithm 16 is estimated depending on the estimated code complexity 18. The potential replacement is estimated depending on the forecasted machine learning model error 20, which is computed as a function of the estimated code complexity 18.

In particular, Fig. 1 shows that in a first step S1 the method starts. In a second step S2, at least one code complexity metric is computed for all functions under investigation. In a third step S3, the hand-coded function 12 under investigation is executed in their operational environment to obtain at least the following runtime metrics: execution time (ET) and memory consumption (MC). In a fourth step S4, a data table with the complexity metrics and profile data of all functions under investigation as variables is generated, including execution time (ET), memory consumption (MC), code complexity (CC) metrics and furthermore of all functions. In a fifth step S5, the hand-coded functions under investigation 12 are clustered based on the data table generated in the previous step S4. In a sixth step S6, it is decided, if there are any functions yielding a high CC and a high ET. If yes, a seventh step S7 is performed, wherein in the seventh step S7, the group or cluster of the hand-coded functions 12 with the high CC and the high ET and/or MC is identified. In an eights step S8, the identified hand-coded functions 12 are suggested for splitting into several sub-functions and starting the investigation from the beginning with the first step S1. After the eights S8, a ninth step S9 is performed, wherein in the ninth step S9, the method is ended.

Coming from the sixth step S6, if there are no hand-coded functions 12 yielding a high CC and a high ET, a tenth step S10 is performed, wherein the group or cluster of functions with the high ET and/or MC and the low CC is identified. Following an eleventh step S11, the hand-coded functions 12 are labeled in the cluster as potential candidates for replacement by functionally equivalent machine learning models 16. A twelfth step S12 follows, wherein for each hand-coded function 12 that was labeled in the previous step S11, the machine learning model error 20 is provided and estimated. The machine learning error estimate is used to decide the further refactoring steps, for example the replacement of the hand-coded function 12 by a machine learning model, or code-based refactoring.

Therefore, the invention proposes the use of static code complexity metrics applied to efficiently hand-coded functions 12, for example having a minimum description length, to forecast the upper bound of the error of a machine learning model approximating the said functions. To this end, the cyclomatic complexity (CC) can be used as a starting point, but other static code complexity metrics can also be used. An efficiently hand-coded function 12 is to be understood as a function written by a programmer such that it nearly fulfills the minimum description length (MDL) condition. This can be achieved either qualitatively through expert judgements or automatically through the use of various optimization techniques, for example a compiler optimization.

In this context, the cyclomatic complexity of an efficiently hand-coded function 12 provides a good estimate of the upper bound of the error of a functionally equivalent machine learning algorithm 16 that was trained using data generated by executing the said hand-coded function 12. In other words, it is assumed that an isometry exists between the complexity of a hand-coded function 12 and the error of a neural network model that has the same inputs and outputs as the said function and is trained using input and output data generated by executing the said function. When training the model, the inputs should cover a relevant region of the input space of the said function.

The cyclomatic complexity metric can thus be computed for a hand-coded function 12 in order to forecast the error of a neural network that is trained using data generated by executing the said function. The advantages of providing an error estimate for a functionally equivalent machine learning algorithm 16 for a hand-coded function 12 without actually training the model and without necessarily executing the function include: The steps of model training and function execution are performed only after identifying a list of candidate function from a much larger list of functions comprised by the software under investigation. This reduces costs and can be executed very fast since computing code complexity metrics are computationally efficient; The analyst is provided with a tool to oversee the fitness of the software codebase in view of an evolution towards ML-intensive software, for example software 2.0. Such a tool can provide invaluable insights that support strategic and technical decision making.

To illustrate the method, consider the example of hand-coded mathematical functions. The functions in a math library are written by highly skilled experts in an efficient way.

Therefore, they come close to fulfilling the condition of a minimal length description of a program that implements the respective math functions. This description is, at the same time, irreducible and sufficient to reach a high level of accuracy. Depending on the accuracy requirements which are specified in various standards (e.g., IEEE Std 754-2019), the implementations of the functions in a standard-conformant math library cover the computational corner cases by employing numerous hardcoded conditions. Hardcoded means embedding data directly into the source code of a program or other executable object, as opposed to obtaining the data from external sources or generating it at runtime. In software engineering hardcoding and "goto" statements are usually considered bad practices because they decrease the readability and maintainability of programs. However, in accurate math libraries, such structures are required to produce highly accurate results and highly efficient implementations, for example a reduced code length with minimal complexity.

The readability and understandability of the functions comprised in a standard-conformant math library is not of great concern since the functions are written by experts for experts rather than a wide audience. It is therefore reasonable to assume that the length of these hand-coded functions 12 is close to the minimum length description of the natural math functions being implemented in consideration of the accuracy requirements. The same assumption can be made for the cyclomatic complexity of the code: The tradeoff between code complexity 18 and accuracy requires the expert programmer to write the program as clear and concisely as possible to produce the most accurate result, at the expense of comprehension by other readers. Therefore, it might be difficult even for a versed code reader to understand why the author distinguishes between so many cases defined by hardcoded conditions. A versed code reader could assume that the author of the code has implemented an empirical, well-defined procedure for computing the respective function. This procedure can be regarded as a minimum length description of the respective function.

The assumption of minimality and accuracy hints towards the typical requirements of a neural network model (or another kind of machine learning model): The model is trained for maximum accuracy and minimal size (e.g., in terms of number of neurons and layers). In case of neural networks, the minimal size requirement can also be understood as an optimal size requirement; since an undersized neural network would lead to underfitting, whereas an oversized neural network would lead to overfitting to a given problem. Concerning the hand-coded function 12, the minimality assumption can also be understood as one of optimality concerning length and complexity; since a shorter program would not be able to compute sufficiently accurate results. In other words, shortening the programs in the math library would result in losing precision. At the same time, making them more verbose is not necessary for the task at hand because more complex code would not produce more accurate results. In other words, by approximation, the math functions from the math library can be regarded as being the shortest programs that can generate (i.e., train) neural networks that are able to compute the respective math functions with an accuracy that asymptotically reaches that of the hand-coded equivalents with respect to the number of training cycles and amount of training data needed.

The following assumptions are considered: The higher the cyclomatic complexity of an efficiently hand-coded computation function, the harder the estimation task for a neural network. An isometric (e.g., linear) relation between the error of a projected neural network model and the cyclomatic complexity of a hand-coded function 12 used to generate training data for the said neural network model can be obtained by fitting a linear model between the two metrics.

The rationale behind this approach is that neural networks are not only universal function approximators but also act as compressors. In minimal length description theory, a model is considered able to learn if it is capable to accurately reproduce the training data while being smaller in size than the training data set. In turn, compressors are regarded as estimators of the complexity. In general, a neural network model will be a lossy compressor because of practical considerations (e.g., limited computational resources). The error of a structure-invariant neural network model, in particular with hyperparameters, (i.e., a universal lossy compressor) will be contingent on the complexity of the model underlying the training data. The more complex the model underlying the training data, the greater the loss in accuracy and thus the model error.

In the case of supervised training using data generated by an exact, hand-coded function 12, it is assumed that the complexity of the said function (e.g., the cyclomatic complexity or another metric defined against the control flow graph of the said function) is transferred to the training data generated by executing that function for an exhaustive or relevant region of the input space. Since the error of a neural network model depends on the complexity of the implicit model underlying the training data, it is assumed that there is an isometric relation between the cyclomatic complexity of a hand-coded function 12 and the error of a neural network model that approximates it. It is further assumed that this isometric relation is linear and that it can be leveraged to formulate a static code-based metric for an efficiently hand-coded function that can be used to forecast the error of a projected neural network model approximating that function.

In a further step, it can be noted that the cyclomatic complexity metric represents a non-injective statistic of the control flow graph. In other words, semantically different functions can have the same cyclomatic complexity. This also applies to the model error of a machine learning algorithm 16. A highly complex hand-coded function 12 will have a complex control flow graph. This already suggests that a proportionally complex neural network architecture will be required to approximate the function accurately. Assuming that the architecture of the neural network is kept invariant (e.g., 1 layer having 16 neurons) and that the network is trained to approximate different functions (e.g., common math functions from a math library), it is assumed that there is a detectable difference between the model errors of the different trained neural network models approximating different functions having different cyclomatic complexities. Provided that the same amount of similarly distributed, randomized training data is used to train the models, this assumption can be validated empirically. Assuming the same conditions (invariant network architecture with hyperparameters, same amount of similarly distributed training data), it is posited that there is a correlation between cyclomatic complexity and model error. If a more complex model underlying the training data cannot be represented by a neural network, the neural network model will be underfitted and thus yield a larger error. The same network, however, could be well-fitted or overfitted for a less complex model underlying another training data set, thus yielding a smaller error.

Conversely- it is assumed that a more complex program will generate a more complex training data set. To measure that complexity, the training error of a neural network model with with hyperparameters that was trained using training data produced by different hand-coded functions 12 with different cyclomatic complexities can be considered.

The proposed approach can be used to identify and replace hand-coded software functions, especially computational functions and other stateless functions (i.e., pure functions that only use the provided parameters to compute the result) and stateful functions (i.e., functions which receive their own state as an input/output parameter) by trained machine learning algorithm 16 in order to: improve the runtime performance of the software (e.g., make it faster or more memory efficient); adapt the behavior of the software in a desired way, e.g. by correcting bugs or improving reliability; and reduce maintenance costs with the software compared, e.g., to maintaining product-grade code.

The approach to identifying and evaluating the functions of a software program in view of replacement by a machine learning algorithm 16 consists of the following steps: Profile the program by measuring the characteristics of the program or individual units of the program (e. g. functions) during execution to obtain measures for the relevant resources used by the program such as execution times (ET), memory consumption (MC), usage of critical instructions or limited resources like file handles; For each function under consideration, compute code complexity metrics (e. g. McCabe, lines of code, ...); Cluster all functions with regard to the obtained metrics from profiling and code complexity 18 using a hierarchical or non-hierarchical, distance-based clustering algorithm; Analyze the clusters or groups of functions regarding different replacement strategies. Depending on the individual cluster's metrics, use an optimal approach for replacement.

For example, the following replacement strategy can be used: a first cluster can contain functions having high execution time (ET) and/or memory consumption (MC) and low values regarding code complexity 18 (CC). The functions in this cluster are suitable candidates to be replaced by equivalent machine learning algorithm 16 to improve performance; a second cluster can contain functions having high execution time (ET) and/or memory consumption (MC) and high values regarding code complexity 18 (CC). The functions in this cluster can first be split into smaller functions, which can then be evaluated again using the procedure illustrated in Fig. 1; a third cluster can contain functions having low execution time (ET) and/or memory consumption (MC) and low values regarding code complexity 18 (CC). The functions in this cluster have good runtime and complexity metrics, which indicates that their replacement by machine learning algorithm 16 would not improve performance and maintenance metrics considerably.

The procedure for replacing a hand-coded function 12 by an equivalent machine learning algorithm 16 can comprise the following steps: Generate input data for training and validating a machine learning algorithm 16 as a substitute for the function.

The following input data generation strategies from the testing domain can be used: systematically generated inputs that exhaustively cover the input space (e.g., using a grid, possibly of differing mesh sizes depending on the problem solved by the function); randomly generated inputs having a probability density function that resembles the usage profile of the function in the operative domain; a mix of these strategies to ensure deterministically that known critical cases are covered sufficiently to enable learning of the required behavior; model-based generated inputs that correspond to known behaviors of the system in the most relevant usage scenarios.

Further steps of the procedure for replacing are: execute the hand-coded function 12 to be replaced for the generated input data to obtain corresponding output data; train the model using training and validation data according to the ML approach chosen until the validation shows the required accuracy. Integrate the new function into the target operational environment; in the same way as in the second step of this procedure and the third step, generate a (possibly small) representative amount of test data in the operational environment of the software in order to measure the performance of the model in the target environment; as an additional measure to ensure correct behavior, a back-to-back test of the system using the function being replaced and the machine learning algorithm 16 approximating that function can be performed.

Fig. 2 shows a diagram according to the relation between the code complexity 18 and the machine learning model error 20. Furthermore a table with mathematic functions and the corresponding code complexity 18 and the machine learning model error 20 is presented. According to an experiment using a selection of twelve functions from math library the complexity was determined/estimated. This selection included the following functions:
- Natural logarithm (log)
- Base-10 logarithm (log10)
- Base-2 logarithm (log2)
- Power (pow(a,b) = ab, with a and b being real numbers)
- Hyperbolic sine (sinh)
- Square root (sqrt)
- Tangent hyperbolic (tanh)
- Hyperbolic cosine (cosh)
- Exponential (exp(a) = e^{a}, with a being a real number)
- Arcsine (asin)
- Arccosine (acos)
- Arctangent (atan)
The cyclomatic complexity of these functions was computed and then a neural network model was trained for each of the twelve candidate functions using data generated as follows.

Training data generation:
Input: A set of 2000 random, positive, sub-unitary numbers represented the common set of inputs to the math functions. For the functions that take two input parameters (e.g., pow), a second set was generated in the same way.
Output: Each math function was then executed for each of the inputs and the resulting output were min-max normalized. Network design and training:
   Architecture: A structure-invariant fully connected, feedforward neural network (i.e., a multi-layer perceptron having two hidden layers of 16 and 8 neurons each and the sigmoid activation function) was trained for each of the functions.
   Training: The cross-validation technique was used, with 30% of the data being used for validation.
   The normalized root means squared error (NRMSE = [root means squared error / standard deviation of the observations]) was computed for each of the resulting 12 neural network models, which were scored against the entire common training data set. Considering that cross-validation was used, this error represents a combination of training and validation error. When computing the cyclomatic complexity of the functions, the code was trimmed such that only the code segments that were used to compute the respective functions for input values from within the interval [0, 1].

A strong correlation between CC and NRMSE (p = 0.89) was shown in this experiment. The CC was adjusted by the parameters of a linear model, which was fitted to the CC and NRMSE for all the 12 functions, resulting in the so-called adjusted cyclomatic complexity (ACC = 0.002 * CC + 0.02). The correlation between NRMSE and ACC is even stronger (p = 0.937) .

These results suggest that computing the ACC for an efficiently hand-coded function 12 can be successfully used to forecast the error of a neural network model trained using data generated by the said function.

## Claims

1. A method for estimating a potential replacement of at least one hand-coded function (12) in a program code (14) with a machine learning model (16) by an electronic computing device (10), comprising the steps of:
- estimating a code complexity (18) of the hand-coded function (12); (S2)
- estimating a machine learning model error (20) for the potential machine learning algorithm (16) depending on the estimated code complexity (18); (S12) and
- estimating the potential replacement depending on the estimated machine learning model error (20).

2. The method according to claim 1, **characterized in that** the code complexity (18) is estimated by using a cyclomatic complexity metric.

3. The method according to claim 1 or 2, **characterized in that**
characteristics of the program code (14) are measured for estimating the potential replacement of the hand-coded function (12).

4. The method according to claim 3, **characterized in that**, as the characteristics, an execution time and/or a memory consumption and/or a usage of critical instructions or limited resources are measured.

5. The method according to any of the proceeding claims, **characterized in that**
a neural network is provided as the machine learning algorithm (16).

6. The method according to any of the proceeding claims, **characterized in that**
the estimation of replacement is performed for a plurality of hand-coded functions (12) of the program code (14).

7. The method according to claim 6, **characterized in that** the plurality of hand-coded functions (12) are clustered depending on the estimated complexity and the other characteristics from claim 4.

8. The method according to any of the proceeding claims, **characterized in that**
depending on a threshold of the forecasted machine learning model error (20) the hand-coded function (12) is suggested for a replacement.

9. The method according to any of the proceeding claims, **characterized in that**
the hand-coded function (12) is replaced with an executable machine learning model (16) depending on the estimated machine learning model error (20).

10. The method according to claim 9, **characterized in that** the used machine learning model (16) is trained with data generated by the replaced hand-coded function (12).

11. The method according to any of the proceeding claims, **characterized in that**
for estimating the machine learning model error (20) depending on the estimated complexity the machine learning algorithm (16) is assumed to be invariant.

12. The method according to any of the proceeding claims, **characterized in that**
for estimating the machine learning model error (20) depending on the estimating complexity an isometric relation, in particular a linear relation, between the complexity and the machine learning model error (20) is assumed.

13. A computer program product comprising program code means for performing a method according to any one of claims 1 to 12.

14. A computer-readable storage medium comprising the computer program product according to claim 13.

15. An electronic computing device (10) for estimating a potential replacement of at least one hand-coded function (12) in a program code (14) by a machine learning model (16), wherein the electronic computing device (10) is configured for performing a method according to any one of claims 1 to 12.
